# EUROPEAN PATENT APPLICATION

(11) **EP 2 113 717 A2**
(43) Date of publication of application: **04.11.2009**
(21) Application number: 09158164.5
(22) Date of filing: 17.04.2009
(51) Int. Cl.: F23D 1/00

(54) **Feed injector systems and methods**

(30) Priority: 30.04.2008 US 112085
(71) Applicant: General Electric Company, Schenectady, NY 12345 (US)
(72) Inventor: Davis, Dustin Wayne, Ballston Lake, NY 12019 (US); Stevenson, John Saunders, Yorba Linda, CA 92887 (US); Brumberg, Justin Thomas, Glenville, NY 12302 (US); Tambe, Samir Baban, Cincinnati, OH 45220 (US)
(74) Representative: Bedford, Grant Richard

(57) **Abstract**

A feed injector system 10 comprises substantially concentric channels 12,14 with one being configured for pneumatically conveying pulverized solid fuel feed from a respective source to a reaction zone and another configured to impart convey an oxidizer stream with and without swirl.

## Description

The subject matter disclosed herein relates generally to integrated gasification combined-cycle (IGCC) power generation systems, and more particularly to systems for injecting feed into a gasifier. Some gasifiers convert a mixture of fuel, air or oxygen, temperature moderator, and/or slag additive into an output of partially oxidized gas, sometimes referred to as "syngas." The syngas is supplied to the combustor of a gas turbine engine, which powers a generator that supplies electrical power to a power grid. Exhaust from the gas turbine engines may be supplied to a heat recovery steam generator that generates steam for driving a steam turbine. Power generated by the steam turbine may be used, for example, to drive an electrical generator that provides electrical power to the power grid.

Fuel, air, oxygen, temperature moderator, such as water or steam, slag additive, or any combination thereof is injected into the gasifier from two or more separate sources through a feed injector that couples the feed sources to a feed nozzle. The feed sources traverse the feed injector as two or more feed streams and are joined together in a reaction zone downstream of the nozzle. Typically, a slurry or other fuel stream is mixed with an oxidizer by using impinging jets, impinging streams, coaxial shear-layers, or a combination thereof, as illustrated in U.S. Patent 4775314. Additionally, gasification feed injectors have used mechanical means to cause a helical flow path of the solids stream as described in WO 2004/094568.

There is a need for properly mixing pneumatically conveyed solid feeds with an oxidizer.

For gasification operations, conventional feed injectors have not utilized swirled fluid oxidizer streams to enhance or control mixing of a slurry or fuel stream. Embodiments described herein relate to different mixing options and more particularly to mixing options for pneumatically conveyed fuel with several including swirling and several not requiring swirling.

In accordance with one embodiment disclosed herein, a feed injector system comprises a circular cross-sectional (circular) channel configured for pneumatically conveying pulverized solid fuel feed from a respective source to a reaction zone and an annular cross-sectional (annular) channel substantially concentric with the circular channel and configured to impart swirling flow to a fluid oxidizer stream.

In accordance with another embodiment disclosed herein, a feed injector system comprises a center body, a first annular channel substantially concentric with the center body and configured for imparting swirling flow to a first fluid oxidizer stream, a second annual channel substantially concentric with the first annular channel and configured for pneumatically conveying pulverized solid fuel feed from a respective source to a reaction zone, and a third annual channel substantially concentric with the second annular channel and configured for imparting swirling flow to a second fluid oxidizer stream.

In accordance with still another embodiment disclosed herein, a feed injector system comprises a circular channel configured for pneumatically conveying pulverized solid fuel feed from a respective source to a reaction zone, a first annular channel substantially concentric with the circular channel and configured for conveying a first fluid oxidizer stream, a second annular channel concentric with the first annular channel and configured for conveying a liquid slurry, and a third annular channel concentric with the second annular channel and configured for conveying a second fluid oxidizer stream.

In accordance with still another embodiment disclosed herein, a feed injector system comprises a circular channel configured for conveying a liquid slurry, a first annular channel substantially concentric with the circular channel and configured for conveying a first fluid oxidizer stream, a second annular channel concentric with the first annular channel and configured for pneumatically conveying pulverized solid fuel feed from a respective source to a reaction zone, and a third annular channel concentric with the second annular channel and configured for conveying a second fluid oxidizer stream.

Various features, aspects, and advantages of the present invention will become better understood when the following detailed description is read with reference to the accompanying drawings in which like characters represent like parts throughout the drawings, wherein:
FIG. 1 illustrates an embodiment of the feed injector system having one circular channel and one annular channel in accordance with one embodiment disclosed herein;
FIG. 2 illustrates an embodiment of the feed injector system having a converging annular channel in accordance with another embodiment disclosed herein;
FIG. 3 illustrates an embodiment of the feed injector system having two additional annular channels in accordance with aspects disclosed herein;
FIG. 4 illustrates a sectional view of the feed injector system shown in FIG. 3 with swirling flows in opposite directions in accordance with aspects disclosed herein;
FIG. 5 illustrates a sectional view of the feed injector system shown in FIG. 3 with swirling flows in the same direction in accordance with aspects disclosed herein; and
FIG. 6 illustrates an embodiment of the feed injector system in accordance with another embodiment disclosed herein.

Embodiments disclosed herein include systems and methods for injecting feed into a gasifier. As used herein, the singular forms "a," "an" and "the" include plural referents unless the context clearly dictates otherwise.

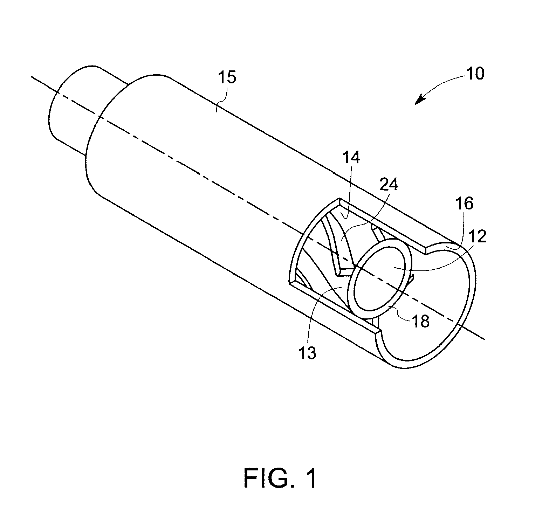

FIG. 1 illustrates an embodiment of a feed injector system 10 comprising a circular cross-sectional channel 12 and an annular cross-sectional channel 14. A first cylindrical wall 13 defines circular channel 12. Circular channel 12 is in the center and is configured for pneumatically conveying pulverized solid fuel feed from a respective source to a reaction zone in a gasifier. A conveying gas is used to convey pulverized solid fuel through the circular channel 12. The diameter of circular channel 12 is large enough to allow passage of the pulverized solid fuel feed while avoiding channel wear. A second cylindrical wall 15 surrounds and is substantially concentric with first cylindrical wall 13. Second cylindrical wall 15 is shown as partially cut out in FIG. 1 for ease of viewing. The space between the first and the second cylindrical walls defines annular channel 14, which is substantially concentric with circular channel 12.

A fluid oxidizer stream flows through annular channel 14. Annular channel 14 includes an arrangement of a plurality of swirl vanes 24 to impart a tangential velocity component to the flow of the fluid oxidizer stream (in other words, to impart swirling flow to the fluid oxidizer stream). The swirl vanes are attached to outer surface of the first cylindrical wall 13 as seen in FIG. 1. In another embodiment, the swirl vanes 24 are attached to the inner surface of wall 15. In yet another embodiment, a portion of the swirl vanes 24 are attached to the outer surface of wall 13 and another portion of the swirl vanes 24 are attached to the inner surface of wall 15. In still another embodiment, some of the swirl vanes are attached to both the outer surface of wall 13 and the inner surface of wall 15. In still yet another embodiment, the swirl vanes are held in place by any means that allow feed injector system to function as provided herein. The purpose of the swirling flow is to enhance mixing between the pulverized solid fuel feed that is pneumatically conveyed through circular channel 12 and the fluid oxidizer stream which flows through the annular channel 14.

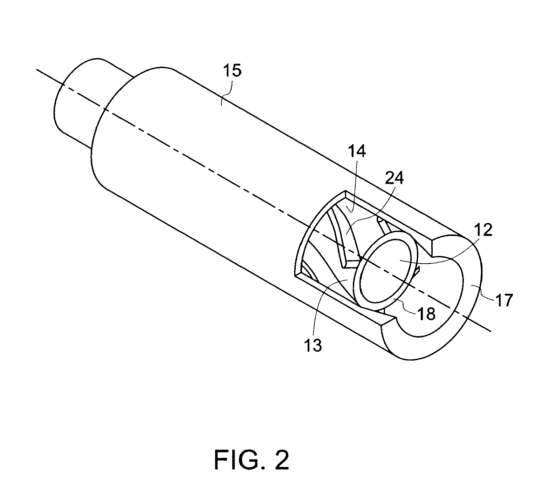

A discharge end 16 of annular channel 14 may extend beyond a discharge end 18 of circular channel 12. In one embodiment as shown in FIG. 1, the surface closest to the centerline axis (interior surface) of tube 15 of the discharge end is straight. In another embodiment as shown in FIG. 2, a discharge end 17 of annular channel 14 is configured to converge the flow of the pulverized solid fuel and oxidizer. In the embodiment of FIG. 2, the interior surface of tube 15 decreases in circular diametric opening (inner diameter) from some axial position upstream of discharge end 17 reaching a minimum inner diameter at or near the discharge end 17. This creates a funnel-like profile inside the second cylindrical wall at the discharge end 17 for converging the combined flows of the pulverized solid fuel and the fluid oxidizer stream.

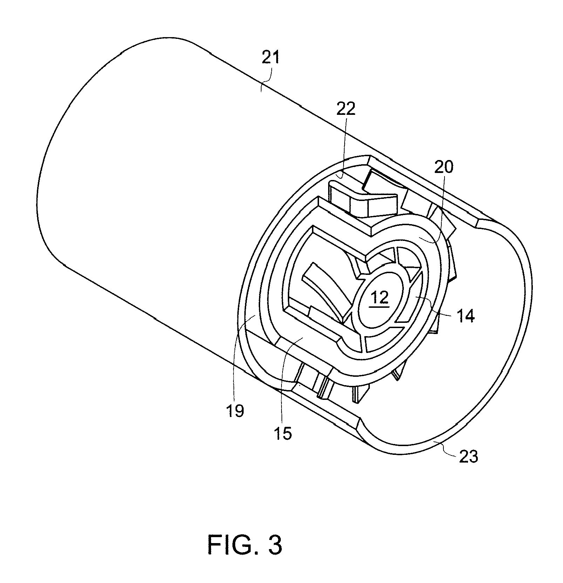

Referring to FIG. 3, in another embodiment, annular channel 14 comprises a first annual channel, and the feed injector system further includes a second annular channel 20. The second annular channel 20 is substantially concentric with the first annular channel and is defined by the space between the second cylindrical wall 15 and a third cylindrical wall 19. In one embodiment, the second annular channel 20 is configured to convey a liquid slurry. The liquid slurry may comprise, for example, a liquid carrier fluid and a carbonaceous fuel, slagging additive, recycled solids, or combinations thereof. In certain embodiments, combinations of slurry and non-slurry substances may be conveyed.

In another embodiment, the circular channel 12 is configured to convey a liquid slurry and the second annular channel 20 is configured to pneumatically convey pulverized solid fuel feed from a respective source to a reaction zone in a gasifier.

FIG. 3 additionally illustrates a third annular channel 22 that is defined by the space between third cylindrical wall 19 and a fourth cylindrical wall 21 and is substantially concentric with the second annular channel 20. The discharge end 23 of the third annular channel 22 extends beyond the discharge ends of circular channel 12, first annular channel 14 and second annular channel 20. Portions of the second cylindrical wall 15, the third cylindrical wall 19 and the fourth cylindrical wall 21 are cut out in FIG. 3 for ease of viewing.

In embodiments, wherein a third annular channel is present, a second fluid oxidizer stream is conveyed through the third annular channel. The third annular channel 22 may also include an arrangement of a plurality of swirl vanes 24 to impart a tangential velocity component to the second fluid oxidizer stream. The swirl vanes are attached to outer surface of third cylindrical wall 19, the inner surface of the fourth cylindrical wall 21, both surfaces, or are held in place by any other means that allows the feed injector to function as described herein. If desired, an appropriate gap may be maintained using spacers or centering fins, for example.

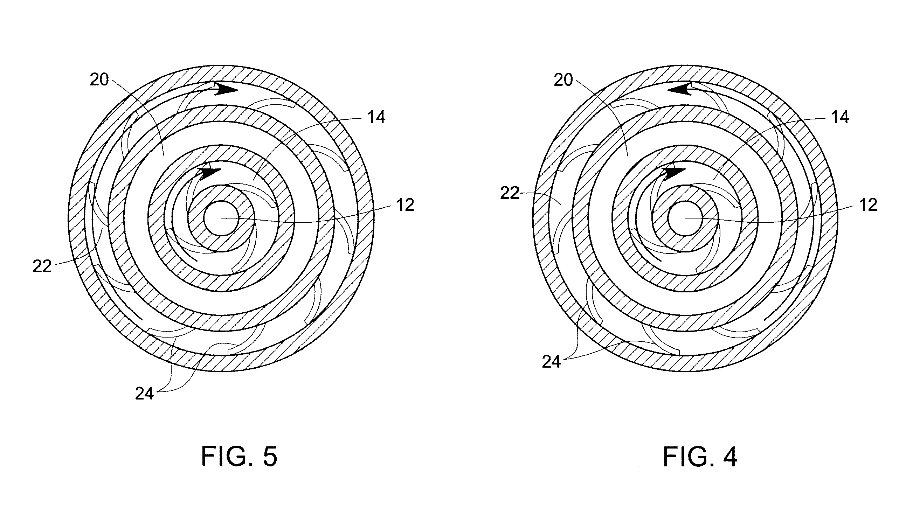

The swirling flows of the fluid oxidizer streams from the first and third annular channels atomize the slurry and oxidize the pneumatically conveyed pulverized solid fuel feed and the carbonaceous material that is contained in the slurry. In one embodiment as shown in FIG. 4, the swirl vanes are arranged such that the direction of swirling flow imparted by the first annular channel 14 is opposite to the direction of swirling flow imparted by the third annular channel 22. In another embodiment shown in FIG. 5, the swirl vanes are arranged such that the swirling flows imparted by the first and third annular channels are in the same direction. The arrows in FIGS. 4 and 5 show the direction of the swirling flow, and can be reversed, respectively, in additional embodiments (not shown).

Although the swirling flows are believed to be beneficial for mixing purposes, in some embodiments, the alternating and momenta of the fluid oxidizer streams are sufficient for mixing, and the structure including circular channel 12, and first, second, and third annular channels 14, 20, and 22 will not necessarily include swirl vanes or any swirling mechanism.

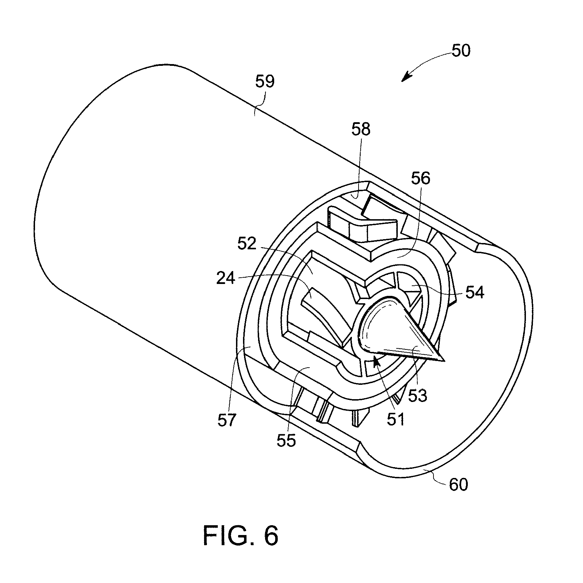

FIG. 6 illustrates another embodiment of a feed injector system 50. The feed injector system 50 includes a center body 51, a first annular channel 54, a second annular channel 56, and a third annular channel 58. The center body comprises a cylindrical member 52 and a conical or alternately contoured member 53 extending from the cylindrical member. A first cylindrical wall 55 surrounds and is substantially concentric with the center body 51, more particularly, with the cylindrical member 52 of the center body. The space between the cylindrical member 52 and the first cylindrical wall 55 defines the first annular channel 54, which is substantially concentric with the cylindrical member 52. A first fluid oxidizer stream is conveyed through the first annular channel 54. The first annular channel 54 includes an arrangement of a plurality of swirl vanes 24 to impart swirling flow to the first fluid oxidizer stream. The swirl vanes are attached to outer surface of cylindrical member 52, the inner surface of first cylindrical wall 55, or both surfaces.

The second annular channel 56 is substantially concentric with the first annular channel 54 and defined by the space between the first cylindrical wall 55 and a second cylindrical wall 57. Pulverized solid fuel feed is pneumatically conveyed from a respective source to a reaction zone in a gasifier through the second annular channel 56.

The third annular channel 58 is substantially concentric with the second annular channel 56 and is defined by the space between the second cylindrical wall 57 and a third cylindrical wall 59. A second fluid oxidizer stream is conveyed through the third annular channel 58. The third annular channel 58 also includes an arrangement of a plurality of swirl vanes 24 to impart a tangential velocity component to the second fluid oxidizer stream. The swirl vanes are attached to outer surface of the second cylindrical wall 57, the inner surface of the third cylindrical wall 59, or both surfaces.

A discharge end 60 of the third annular channel 58 extends beyond the center body 51, the first annular channel 54 and the second annular channel 56. The conical member 53 of the center body 51 is useful for preventing a recirculation zone as a result of the wake formed by center body 52.

The swirling flows imparted by the first annular channel 54 and the third annular channel 58 oxidize the pulverized solid fuel feed that is conveyed through the second annular channel producing syngas. The swirl vanes in the first and third annular channels can be arranged to impart swirling flows in same direction or in opposite direction as discussed above.

The ends of the cylindrical walls are shown as flat in the above figures of all the embodiments. However, in one embodiment, the ends of the cylindrical walls may be rounded, tapered or shaped to control vortex shedding.

Various embodiments described herein may thus be used to improve the mixing of pneumatically conveyed solid feeds with an oxidizer, and thus are useful in increasing carbon conversion of the feed stock, increasing the output of syngas, and efficiency of the gasifier.

Although most of the examples herein have been described as systems, each is also applicable as a method of use with one example being a method for operating a feed injector system comprising (a) supplying pulverized solid fuel feed from a source to a reaction zone through a circular channel configured for pneumatically conveying the pulverized solid fuel feed; and (b) supplying a fluid oxidizer stream through an annular channel substantially concentric with the circular channel and configured to impart swirling flow to the fluid oxidizer stream.

While certain features of the invention have been illustrated and described herein, many modifications and changes will occur to those skilled in the art. For example, in other embodiments, the liquid slurry is replaced by a non-slurry feed such as a pneumatically conveyed solid particulate feed, a liquid fuel such as a liquid hydrocarbon fuel, a gaseous fuel such as a gaseous hydrocarbon fuel or fuel gas, or a temperature moderator such as water. In still other embodiments, one of the fluid oxidizer streams in the embodiments incorporating two fluid oxidizer streams is replaced by an alternate gaseous feed, such as a gaseous hydrocarbon fuel, fuel gas, or recycle syngas, or a gaseous temperature moderator, such as recycle carbon dioxide or steam. In still other embodiments, the fluid oxidizer stream is combined with a temperature moderator, such as steam or water, upstream of the discharge end of the injector system in any manner that facilitates operation of the injector system as described herein. In still yet other embodiments, the pulverized solid fuel is combined with recycle solids or slag additive upstream of the discharge end of the injector system in any manner that facilitates operation of the injector system as described herein.

It is to be understood that the appended claims are intended to cover all such modifications and changes as fall within the true spirit of the invention.

Various aspects and embodiments of the present invention are now defined by the following numbered clauses:
1. A feed injector system, comprising:
   a circular channel configured for pneumatically conveying pulverized solid fuel feed from a source to a reaction zone; and
   an annular channel substantially concentric with the circular channel and configured to impart swirling flow to a fluid oxidizer stream.
2. The system of clause 1, wherein a discharge end of the annular channel extends beyond a discharge end of the circular channel.
3. The system of any preceding clause, wherein a discharge end of the annular channel is configured to converge the combined flows of the pulverized solid fuel and the fluid oxidizer stream.
4. The system of any preceding clause, wherein the annular channel comprises a first annular channel and further comprising:
   a second annular channel substantially concentric with the first annular channel and configured for conveying a liquid slurry, a non-slurry feed, a liquid fuel, a gaseous fuel, or a temperature moderator.
5. The system of any preceding clause, wherein the fluid oxidizer stream comprises a first fluid oxidizer stream and further comprising:
   a third annular channel substantially concentric with the second annular channel and configured to impart swirling flow to a second fluid oxidizer stream.
6. The system of any preceding clause, wherein the first and third annular channels are configured to impart swirling flows in opposite directions.
7. The system of any preceding clause, wherein the first and third annular channels are configured to impart swirling flows in same direction.
8. The system of any preceding clause, wherein the liquid slurry comprises a liquid carrier fluid and a carbonaceous fuel, slagging additive, recycled solids, or combinations thereof.
9. The system of any preceding clause, wherein a discharge end of the third annular channel extends beyond the ends of the circular channel, the first annular channel and the second annular channel.
10. They system of any preceding clause embodied in a gasification system.
11. The system of any preceding clause, wherein the annular channel comprises a first annular channel and further comprising:
   a second annular channel substantially concentric with the first annular channel and configured for conveying a solid particulate feed, a liquid fuel, a gaseous fuel, a moderator, or combinations thereof.
12. The system of any preceding clause, wherein the fluid oxidizer stream is combined with a temperature moderator upstream of a discharge end of the injector system.
13. A feed injector system, comprising:
   a center body;
   a first annular channel substantially concentric with the center body and configured for imparting swirling flow to a first fluid oxidizer stream;
   a second annular channel substantially concentric with the first annular channel and configured for pneumatically conveying pulverized solid fuel feed from a source to a reaction zone; and
   a third annular channel substantially concentric with the second annular channel and configured for imparting swirling flow to a second fluid oxidizer stream.
14. The system of clause 13, wherein the center body is configured to converge the flow of the pulverized solid fuel.
15. The system of clause 13 or 14, wherein a discharge end of the third annular channel extends beyond the first annular channel and the second annular channel.
16. A feed injector system, comprising:
   a circular channel configured for pneumatically conveying pulverized solid fuel feed from a source to a reaction zone;
   a first annular channel substantially concentric with the circular channel;
   a second annular channel concentric with the first annular channel and configured for conveying a liquid slurry, a feed material, or combinations thereof; and
   a third annular channel concentric with the second annular channel and , wherein at least one of the first and third annular channels is configured for conveying a fluid oxidizer stream.
17. The system of clause 16, wherein the liquid slurry, the feed material, or combinations thereof comprises a liquid carrier fluid, and a carbonaceous fuel, a slagging additive, recycled solids, a solid particulate feed, a liquid fuel, a gaseous fuel, a moderator, or combinations thereof.
18. The system of clause 16 or 17, wherein a discharge end of the third annular channel extends beyond the ends of the circular channel, the first annular channel, and the second annular channel.
19. The system of any of clauses 16 to 18, wherein a discharge end of the first annular channel is configured to converge the flow of the pulverized solid fuel.
20. The system of any of clauses 16 to 19 embodied in a gasification system.
21. The system of any of clauses 16 to 20 wherein each of the first and third annular channels is configured for conveying a fluid oxidizer stream.
22. The system of any of clauses 16 to 21, wherein at least one of the oxidizer streams in the first and third annual channels is combined with a temperature moderator upstream of a discharge end of the injector system.
23. The system of any of clauses 16 to 22, wherein first and third annular channels is configured for conveying the fluid oxidizer stream and the other of the first and third annular channels is configured for conveying a gaseous feed, a gaseous temperature moderator, or combinations thereof.
24. A feed injector system, comprising:
   a circular channel configured for conveying a liquid slurry;
   a first annular channel substantially concentric with the circular channel and configured for conveying a first fluid oxidizer stream;
   a second annular channel concentric with the first annular channel and configured for pneumatically conveying pulverized solid fuel feed from a source to a reaction zone; and
   a third annular channel concentric with the second annular channel and configured for conveying a second fluid oxidizer stream.
25. A method for operating a feed injector system, comprising:
   supplying pulverized solid fuel feed from a source to a reaction zone through a circular channel configured for pneumatically conveying the pulverized solid fuel feed; and
   supplying a fluid oxidizer stream through an annular channel substantially concentric with the circular channel and configured to impart swirling flow to the fluid oxidizer stream.
26. The method of clause 25 further comprising supplying a combination of the pulverized sold fuel feed and recycle solids or slag additive through the circular channel.
27. The method of clause 25 or 26 further comprising supplying a liquid slurry, a non-slurry feed, a liquid fuel, a gaseous fuel, a temperature moderator, or combinations thereof through a second annular channel substantially concentric with the first annular channel.
28. The method of any of clauses 25 to 27 further comprising supplying a second fluid oxidizer stream through a third annular channel substantially concentric with the second annual channel and configured to impart swirling flow to the second fluid oxidizer stream.

## Claims

1. A feed injector system (10), comprising:
a circular channel (12) configured for pneumatically conveying pulverized solid fuel feed from a source to a reaction zone; and
an annular channel (14) substantially concentric with the circular channel (12) and configured to impart swirling flow to a fluid oxidizer stream.

2. The system (10) of claim 1, wherein a discharge end (16) of the annular channel (14) extends beyond a discharge end (18) of the circular channel (12).

3. The system (10) of any preceding claim, wherein a discharge end (17) of the annular channel (14) is configured to converge the combined flows of the pulverized solid fuel and the fluid oxidizer stream.

4. The system (10) of any preceding claim, wherein the annular channel comprises a first annular channel and further comprising:
a second annular channel (20) substantially concentric with the first annular channel and configured for conveying a liquid slurry, a non-slurry feed, a liquid fuel, a gaseous fuel, or a temperature moderator.

5. The system (10) of claim 4, wherein the oxidizer stream comprises a first oxidizer stream and further comprising:
a third annular channel (22) substantially concentric with the second annular channel (20) and configured to impart swirling flow to a second oxidizer stream.

6. The system (10) of claim 5, wherein the first and third annular channels (14,22) are configured to impart swirling flows in opposite directions.

7. The system (10) of claim 5, wherein the first and third annular channels (14,22) are configured to impart swirling flows in same direction.

8. The system (10) of any of claims 4 to 7, wherein the liquid slurry comprises carbonaceous fuel, slagging additive slurry, recycled solids, or combinations thereof.

9. The system (10) of claim 5 or any claim dependent thereon, wherein a discharge end (28) of the third annular channel (22) extends beyond the circular channel (12), the first annular channel (14) and the second annular channel (20).

10. The system (10) of any preceding claim embodied in a gasification system.
